# EUROPÄISCHE PATENTSCHRIFT

(11) **EP 0 789 006 B1**
(45) Veröffentlichungstag und Bekanntmachung des Hinweises auf die Patenterteilung: **27.10.1999**
(21) Anmeldenummer: 97106300.3
(22) Anmeldetag: 22.06.1995
(51) Int. Cl.: C04B 28/02, C04B 7/52, C04B 40/06

(54) **Trockengemenge zur Herstellung einer Zementsuspension sowie Verfahren zu ihrer Herstellung und Vorrichtung zur Durchführung des Verfahrens**
Dry mixture for making a cement suspension, process for its preparation and device for carrying out the process
Mélange sec pour une suspension de ciment, procédé pour sa fabrication et dispositif pour la mise en oeuvre du procédé

(30) Priorität: 12.08.1994 DE 4428692
(43) Veröffentlichungstag der Anmeldung: 13.08.1997
(62) Teilanmeldung aus: 95109750.0
(73) Patentinhaber: DYCKERHOFF AKTIENGESELLSCHAFT, D-65203 Wiesbaden (DE)
(72) Erfinder: Chartschenko, Igor, Dr., 99425 Weimar (DE); Teichert, Horst, Dieter, 65366 Geisenheim (DE); Perbix, Wolfgang, Dr., 65189 Wiesbaden (DE); Rudert, Volkhart, Dr., 55271 Stadecken-Elsheim (DE)
(74) Vertreter: Patentanwälte Dr. Solf & Zapf

(56) Entgegenhaltungen:
- EP-A- 0 157 749
- EP-A- 0 314 351
- EP-A- 0 455 940
- EP-A- 0 631 994
- WO-A-90/13524
- DE-A- 3 813 445
- US-A- 5 026 215
- US-A- 5 234 497
- CHEMICAL ABSTRACTS, vol. 118, no. 6, 8.Februar 1993 Columbus, Ohio, US; abstract no. 44459r, XP000352522 & JP 04 254 457 A (DENKI KAGAKU KOGYO K.K.) 9.September 1992
- FONTANARI F: "DAS NEUE ROEFIX-TROCKENMOERTELWERK SENNWALD/SCHWEIZ" ZKG INTERNATIONAL, Bd. 43, Nr. 8, 1.August 1990, Seiten 399, 400-404, XP000175437
- G.BLUNK ET AL.: "Zum Einfluss der Korngrössenverteilung von Hüttensand und Klinker auf die Eigenschaften von Hochofenzementen" ZEMENT, KALK, GIPS, Bd. 41, Nr. 12, 1988, WIESBADEN DE, Seiten 616-623, XP002000145

## Beschreibung

Die Erfindung betrifft ein Trockengemenge in Form einer Feinstzement-Bindemittelmischung zur Herstellung von Zementsuspensionen zum Füllen und/oder Verpressen von Porenräumen und Hohlräumen in Lockergesteinen oder Rissen und Hohlräumen im Fels oder in Betonbauwerken. Die Erfindung betrifft ferner ein Verfahren zur Herstellung des Trockengemenges und eine Vorrichtung zur Durchführung des Verfahrens.

Feinstzemente sind sehr feinkörnige hydraulische Bindemittel mit stetig und eng abgestuften Kornverteilungen und einer Begrenzung des Größtkorns. Die Eigenschaften und die Verwendung von Feinstzementen ist geregelt, zum Beispiel in einem vorläufigen Merkblatt für Einpressarbeiten mit Feinstbindemitteln in Lockergesteinen (Bautechnik 70, [1993], Heft 9, Ernst & Sohn, Seiten 550 bis 560, und ZTV-RISS 93, Verkehrsblatt-Dokument B 5237, Verkehrsblatt-Verlag).

Die Terminologie in den beiden genannten Regelwerken ist nicht einheitlich. Im Merkblatt wird der Begriff "Feinstbindemittel" und in der ZTV-RISS der Begriff "Feinzement" verwendet. Die amerikanische Literatur spricht von mikrofeinen Portlandzementen (US-PS 5 106 423). Im folgenden wird hauptsächlich der Begriff "Feinstzement" verwendet, der auch in einschlägigen Fachberichten verwendet wird (Beton 1/94, Seite 12 bis 16, Felsbau 11 [1993], Nummer 6, Sonderabdruck, Bauingenieur 67, [1992], Seite 499 bis 504).

Nach den Vorschriften der Regelwerke soll der Feinstzement zur Herstellung von Zementsuspensionen einen Siebdurchgang von ≥95% bei einer Maschenweite von 16 µm (0,016 mm) haben und mit geeigneten Zusatzstoffen und Zusatzmitteln hergestellt sein. Die Begriffe und Begriffsinhalte der Bestandteile Zusatzstoffe und Zusatzmittel sind im Zement-Merkblatt Nr. B 3, BBD/KA 1.93/20 definiert.

Als Füllgut zum Füllen und/oder Verpressen (Injektion) wird eine Zementsuspension verwendet, die grundsätzlich an der Baustelle hergestellt wird. Sie wird zusammengestellt aus mindestens zwei Gebindekomponenten, nämlich der einen, enthaltend Feinstzement und Zusatzstoffe und der anderen, enthaltend Zusatzmittel (György Iványi, Walter Rosa: "Füllen von Rissen und Hohlräumen im Konstruktionsbau mit Zementsuspensionen", Beton- und Stahlbetonbau 87 [1992], Heft 9, Seite 224 bis 229; Helmut Sager und Holger Graeve: "Einsatzmöglichkeiten zementgebundener Injektionssysteme", Beton 1/94, Seite 12 bis 16).

Der Erfolg einer Injektion mit dem Füllgut ist abhängig von den zum Beispiel rheologischen Eigenschaften der Zementsuspension und den mechanisch-technologischen Eigenschaften des hydratisierten Materials in den Hohlräumen bzw. Rissen. Erforderlich ist ein wirksames Aufschließen des Feinstzements durch eine Intensivmischung und die richtige Beimengung der erforderlichen Zusatzmittel in der vom Hersteller des Feinstzements vorgeschriebenen Reihenfolge und Arbeitsweise. Die festen und flüssigen Gebindekomponenten zur Herstellung des Füllguts werden vom Hersteller als Einzelkomponenten angeliefert und müssen auf der Baustelle entsprechend den Regelwerken in Gebinden gelagert werden, wobei mit erheblichem Aufwand große Sorgfalt bezüglich der Lagerbedingungen und der Einhaltung der Mischungsverhältnisse und der Mischungsreihenfolge zur fachgerechten Bereitstellung der Zementsuspensionen gewährleistet werden muß.

In der DE 40 13 871 A1 wird gemäß Anspruch 1 die Mischreihenfolge zur Herstellung der Zementsuspension aus Feinstzement und Zusatzmitteln, wie Verflüssiger, Quellmittel, Abbindeverzögerer und Wasserrückhaltemittel genau vorgeschrieben und gemäß Anspruch 2 gefordert, daß demineralisiertes Wasser verwendet werden soll. Als Quellmittel sollen Aluminate und Bentonite enthalten sein.

Gemäß US-PS 5 106 423 wird ebenfalls eine bestimmte Mischreihenfolge vorgeschrieben (Spalte 2, Zeile 37 bis 56). Gemäß dieser Druckschrift können unter anderem auch Gemische aus separat gemahlener Feinstschlacke und separat gemahlenem Feinstzement zusammengestellt werden, wenn die Feinheit der Stoffe bezüglich besonderer Anforderungen variiert werden soll (Spalte 7, Zeile 8 bis 26) . Zudem kann vorgesehen sein, inerte Zusatzstoffe gleicher Korngröße zu verwenden (Spalte 7, Zeile 38 bis 46).

Das Anliefern und Lagern von Gebindekomponenten sowie das Entsorgen von Gebinden sind Maßnahmen, die die Füllgutherstellung erheblich verteuern. Außerdem ist die vorgeschriebene Handhabung und Mischung der Gebindekomponenten auf der Baustelle in vielen Fällen nicht ausreichend gewährleistbar und erfordert sehr aufwendige und strenge Überwachungsbedingungen. Zudem ist feststellbar, daß, selbst wenn die bekannten Aufschließmethoden des Feinstzements beachtet werden, die Qualität der Zementsuspension und insbesondere des aus der Zementsuspension entstehenden hydratisierten Materials von Gebinde zu Gebinde erheblich schwanken kann. Die Ursachen dafür waren bisher unbekannt.

Wegen des vergleichsweise hohen Wasseranspruchs von Feinstzementen tritt beim Erhärtungsprozeß ein ausgeprägtes Schwinden auf, das bisher durch Verwendung in diesem Zusammenhang bekannter Zusatzstoffe (Bentonit) oder Zusatzmittel (Quellkomponenten) nur teilweise und unkontrollierbar kompensiert werden konnte. Bei den oben beschriebenen erfindungsgemäßen Werktrockenmischungen ist zwar die Schwindung kontrollierbar, weil herstellungsbedingt das Feinstzement-Bindemittel die Zusatzstoffe und die Zusatzmittel in ihrer Wirkung kontrollierbar enthält, die Nachteile der Schwindung, nämlich insbesondere Haftzugfestigkeitsverluste, können aber nicht kompensiert werden. Bei den bekannten Gebinden nach dem Stand der Technik hat sich gezeigt, daß insbesondere auch die Schwindmaße schwanken und - resultierend daraus - keine gleichmäßige Qualität der mechanisch-technologischen Eigenschaften des erhärteten Füllguts gewährleistet werden kann. Aufgabe der Erfindung ist, eine vorbestimmte Quellung unter Berücksichtigung des Schwindens bzw. Schrumpfens zu erzeugen, und ein bestimmtes Quellmaß auf die jeweilige Anwendung abzustimmen. Durch den Quelleffekt bzw. die Volumenzunahme sollen die Haftzugfestigkeitsverluste eines Verbundsystems, bestehend aus Gestein (z.B. Fels) oder Beton und injiziertem Füllgut, steuerbar und vorherbestimmbar vermieden werden. Außerdem soll bei der Verfüllung eines Hohlraumes bzw. eines Risses aufgrund der Quellung die Dichtigkeit des Verbundsystems verbessert werden.

Diese Aufgaben werden durch die Merkmale des Anspruchs 1 gelöst. Vorteilhafte Weiterbildungen der Erfindung werden in den Unteransprüchen gekennzeichnet.

Es sind zahlreiche sogenannte Quellzemente bekannt, die ausschließlich auf Zementen üblicher Zusammensetzung und Mahlfeinheit sowie üblichen Quellkomponenten basieren. Die langjährige praktische Erfahrung mit diesen Quellzementen hat gezeigt, daß eine gewisse Gewährleistung der Eigenschaften bei Quellzementen mit Ettringit-bildenden Quellkomponenten erreicht werden kann, wobei die bekannten Quellzemente aus Mischungen von handelsüblichen Portlandzementen mit einer aluminatsulfathaltigen Komponente bestehen. Die Eigenschaften dieser bekannten Quellzemente hängen von der chemisch-mineralogischen Zusammensetzung und dem Mengenverhältnis der Komponenten sowie von technologischen Faktoren, wie zum Beispiel von Konsistenz- und Lagerungsbedingungen oder dergleichen ab. Trotz umfangreicher Erfahrungen bei praktischen Anwendungen dieser bekannten Quellzemente bestehen erhebliche Probleme bei der zielsicheren Steuerung des die Eigenschaften des festen Materials bestimmenden Strukturbildungsprozesses bei der Erhärtung. Bei den bekannten Quellzementen dienen hauptsächlich das Gewichtsverhältnis zwischen Portlandzementanteil und Quellkomponente sowie die chemische Aktivität der Quellkomponenten als steuerbare Einflußfaktoren.

Das erfindungsgemäße Trockengemenge besteht aus einem auf die jeweilige Anwendung abgestimmten, werksseitig vorkonfektionierten Gemisch (Werktrockenmischung) aus einer besonders aufbereiteten Feinstzement-Bindemittelmischung, die alle für die jeweilige spezielle Anwendung erforderlichen Zusatzstoffe und Zusatzmittel vorzugsweise mit gleicher oder höherer Mahlfeinheit sowie abgestimmter Kornverteilung, guter Dispergierbarkeit in Wasser und hoher Reaktivität aufweist. Die Trockenmischung ist auf der Baustelle nur noch mit Wasser in der vorgeschriebenen Menge anzumischen. Die Erfindung betrifft somit eine unter Baustellenbedingungen einfach anmischbare Werktrokkenmischung. Die Gefahr etwaiger Mischfehler bei gravimetrischer und/oder volumetrischer Abstimmung von Gebindekomponenten auf der Baustelle ist ausgeschlossen. Zudem entfällt die Einhaltung der bisher erforderlichen Reihenfolge bei der Mischung von Gebindekomponenten, die bei Mißachtung bisher zu erheblichen Qualitätsänderungen geführt hatte. Das auf die Formulierung der Werktrockenmischung mit vorgegebener Mahlfeinheit und Kornverteilung abgestimmte erfindungsgemäße Herstellungsverfahren ermöglicht die genaue Dosierung aller Komponenten wie des Klinkerfeinstmehls und/oder des Hüttensandfeinstmehls sowie der trockenen Additive, wie Zusatzstoffe und Zusatzmittel. Die erfindungsgemäße Werktrockenmischung erfordert kein demineralisiertes Wasser. Sie kann auch mit Restwasser mit Chloridgehalten entsprechend Tabelle 1 der "Restwasser-Richtlinie", des DAfStb (Deutscher Ausschuß für Stahlbeton, "Richtlinie für Herstellung von Beton unter Verwendung von Restwasser, Restbeton und Restmörtel" [Ausgabe September 1991]) angemischt werden. Infolge der abgestimmten Rezeptur sind die verarbeitungstechnischen Eigenschaften der Suspensionen sowie die mechanisch-technologischen Eigenschaften des hydratisierten Materials weitgehend unabhängig von der Wasserqualität.

Die Vermeidung von verarbeitungstechnischen Fehlern beim Mischungsansatz der Suspensionen gemäß vorliegender Erfindung ist zum Beispiel für die Akzeptanz und den Erfolg von Injektionsmaßnahmen mit Feinstbindemitteln von entscheidender Bedeutung, weil eine Wiederholung von Injektionsmaßnahmen zum Ersatz zuvor injizierter, fehlerhaft angemischter Füllgüter mit unzureichenden Eigenschaften in der Regel nicht mit wirtschaftlich vertretbarem Aufwand möglich ist. Zudem bietet der Einsatz von erfindungsgemäßen Werktrockenmischungen wirtschaftliche Vorteile bei der Abfüllung, Lagerung und beim Transport sowie bei der Entsorgung etwaiger Transportbehälter.

Nach der Erfindung enthält das Trockengemenge das oder die Feinstmehle, trockene Zusatzmittel und gegebenenfalls trockene Zusatzstoffe. Das Feinstmehl besteht aus einem Portlandzementklinkerfeinstmehl (das ist ein ohne weiteres insbesondere ohne Sulfatträgerzusatz feinstgemahlener Portlandzementklinker) oder aus einem Gemenge aus einem Portlandzementklinkerfeinstmehl und einem Hüttensandfeinstmehl (das ist ein ohne weiteres feinstgemahlener Hüttensand) oder lediglich einem Hüttensandfeinstmehl plus Anreger. Als Zusatzstoff wird vorzugsweise Bentonit verwendet. Zusatzmittel sind im wesentlichen Fließmittel bzw. Dispergiermittel, Erstarrungsverzögerungsmittel, Wasserrückhaltemittel, Erstarrungsbeschleunigungsmittel und Quellkomponenten.

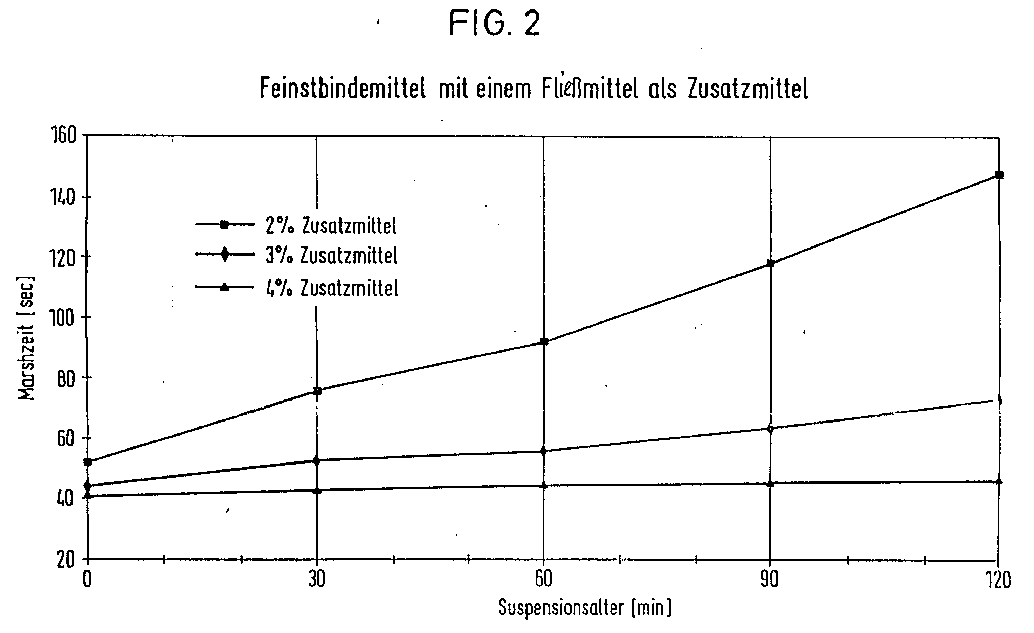

Die Zusatzmengen zum Klinkerfeinstmehl oder zum Gemenge aus Klinkerfeinstmehl und Hüttensandfeinstmehl oder zum Hüttensandfeinstmehl sind sehr genau und reproduzierbar aufeinander abgestimmt, wobei vorzugsweise alle wesentlichen Bestandteile eine Kornverteilung d95 ≤ 24 µm, vorzugsweise d95 ≤ 16 µm, und d50 ≤ 7 µm, vorzugsweise d50 ≤ 5 µm, und vorzugsweise ein Verhältnis von d50 zu d95 = 0,33 ± 0,04 aufweisen (d95 = Korndurchmesser bei 95 Gew.-% des Siebdurchgangs; d50 = Korndurchmesser bei 50 Gew.-% des Siebdurchgangs). Insbesondere wenn diese Bedingungen eingehalten werden, ist es möglich, den Einfluß eines Zusatzmittels zu optimieren. Beispielsweise ergibt sich der Einfluß der Zusatzmenge, zum Beispiel eines Fließmittels, auf die verarbeitungstechnischen Eigenschaften einer Zementsuspension aus einer Feinstzement-Bindemittelmischung mit einem Wasser-Bindemittelverhältnis von 0,7 aus der nachfolgenden Figur 2. Die Kurvenverläufe verdeutlichen ohne weiteres, daß bereits bei geringfügigen Abweichungen des Fließmittelanteils von einem vorgegebenen Mischungsverhältnis die den Injektionserfolg maßgeblich bestimmenden rheologischen Eigenschaften der Suspension beeinflußt werden. Dabei wird durch die Erhöhung des Fließmittelanteils von 2 auf 4 Gew.-% die Ausgangsviskosität der Suspension - in Figur 2 gekennzeichnet durch die Marshzeit zum Zeitpunkt t = 0 - vergleichsweise geringfügig beeinflußt; jedoch unterliegt die anschließende Viskositätsentwicklung während der Verarbeitungszeit des frischen Gemisches einer ausgeprägten Abhängigkeit von der Dosierung des Fließmittels. Eine sachgerechte Applikation von Zementsuspensionen kann daher nur dann erwartet werden, wenn sowohl die Ausgangsviskosität als auch die Viskosität nach Ablauf der Verarbeitungszeit durch die Auswahl eines geeigneten Fließmittels mit abgestimmter Einwaage optimiert werden.

Bei der Optimierung der Dosierung von Zusatzmitteln ist gleichzeitig der Einfluß des Additivs auf die Festigkeiten der hydratisierten Suspensionen zu berücksichtigen, damit den vor allem mit statisch wirksamen Instandsetzungsmaßnahmen einhergehenden Materialanforderungen entsprochen werden kann. Die in der nachfolgenden Tabelle 1 zusammengestellten Ergebnisse aus Druckfestigkeitsuntersuchungen an prismatischen Prüfkörpern zeigen, daß eine Über-Dosierung des Fließmittels von 5 Gew.-% bereits zu Frühfestigkeitseinbußen führt. Bei einem Fließmittelanteil von 6 Gew.-% sind keine Druckfestigkeiten mehr an den völlig unzureichend verfestigten Suspensionen meßbar.

**Tabelle 1**

| Frühfestigkeiten von Zementsuspensionen (Wasser-Bindemittelverhältnis = 0,6) in Abhängigkeit von der Einwaage des Zusatzmittels | |
|---|---|
| Einwaage Zusatzmittel [Gew.-%] | Druckfestigkeit nach 2 Tagen [N/mm²] |
| 4% | 20,8 |
| 5% | 18,9 |
| 6% | nicht meßbar |

Überraschenderweise hat sich gezeigt, daß qualitätssicherungs- und verarbeitungstechnische Probleme bei der Verwendung von mehrkomponentigen Systemen auf der Baustelle vermieden werden können bei gleichzeitiger Erfüllung von hohen Ansprüche an das Füllgut, wenn bei der Herstellung einer Zementsuspension eine vorkonfektionierte Trockenmischung bestimmter Mahlfeinheit und Kornverteilung aus Feinstmehlen, Zusatzstoffen und Zusatzmitteln verwendet wird. Dies gelingt dadurch, daß den Ausgangsmaterialien zur Herstellung der erfindungsgemäßen Trockengemenge die je nach Anwendungsfall erforderlichen Zusatzstoffe und Zusatzmittel bereits im Werk nach der ausschließlichen Mahlung eines Klinkers bzw. eines Hüttensandes beigemengt werden, so daß diesem Trockengemenge zur Verarbeitung auf der Baustelle lediglich noch Wasser entsprechend dem vorgegebenen Wasser-Bindemittelwert zur Bereitstellung der verarbeitungsfertigen Zementsuspension hinzuzugeben ist. Dies ist möglich durch die Verwendung pulverförmiger Zusatzmittel und Zusatzstoffe mit einer zum Beispiel dem Feinstmehl entsprechenden Mahlfeinheit und Kornverteilung, wodurch diese Zusatzstoffe und Zusatzmittel eine sehr gute Dispergierbarkeit und Reaktivität beim Anmischen der Trockenmischung mit Wasser erhalten. Die abgestimmte Dispergierbarkeit bzw. Wasserlöslichkeit und Reaktivität dieser redispergierbaren Trocken-Komponenten gewährleisten eine unmittelbare Wirksamkeit der Inhaltsstoffe nach der Vermengung mit dem Anmachwasser. Dabei ist überraschend, daß nicht nur unterschiedliche Zusatzmengen sondern insbesondere unterschiedliche Mahlfeinheiten und Kornverteilungen, insbesondere im Rahmen der angegebenen d95- und d50- Grenzen bzw. Verhältnisse, entsprechend unterschiedliche Wirkungen erbringen, was vor dem durch das Vorhalten von getrennten Gebindekomponenten und vorgeschriebene Mischreihenfolgen sowie die Verwendung von demineralisiertem Wasser versucht worden war. Die Zusatzmittel reagieren im angegebenen Feinheitsbereich unerwartet sensibel, so daß als Parameter für vorbestimmbare Eigenschaften die Mahlfeinheit und die Kornverteilung verwendet werden können.

Zur Formulierung des erfindungsgemäßen Trockengemisches sind Mahl-, Sicht-, Dosier- und Mischanlagen erforderlich, die eine zielsichere Herstellung der Feinstzement-Bindemittelmischung gleichmäßiger Qualität erlauben. Das erfindungsgemäße Verfahren ist dadurch gekennzeichnet, daß die Einzelkomponenten völlig getrennt bis zu einer vorgegebenen Mahlfeinheit und Kornverteilung aufbereitet werden. Mit Hilfe exakt steuerbarer Dosier- und Mischanlagen wird anschließend die Trockenmischung gemäß ihrer vorgegebenen chemisch-mineralogischen Zusammensetzung durch Homogenisierung erstellt.

Die erfindungsgemäßen vorkonfektionierten Trockengemenge (Werktrockenmischungen) zeichnen sich dadurch aus, daß sie durch Mischen mit Wasser mischungsstabile niedrig- bis mittelviskose Zementsuspensionen ergeben, die sich aufgrund der chemisch-mineralogischen und physikalischen Spezifikation der Trockenmischung und der Konsistenz nach dem Anmischen mit Wasser sowie aufgrund geringe Reaktivität während der Verarbeitungszeitspanne durch besonders gute Verarbeitbarkeit auszeichnen, so daß sie als mineralische Systeme für Tränkungen und Injektionen aller Art geeignet sind. Zudem können aufgrund der Zusammensetzung der Trockenmischungen nach Ablauf der Verarbeitungszeitspanne vergleichsweise hohe Frühfestigkeiten des hydratisierten Gemisches erreicht werden, so daß derartige Zementsuspensionen auch für statisch wirksame (kraftschlüssige) Maßnahmen geeignet sind und zwar unabhängig vom Feuchtezustand der zu injizierenden Bauteile.

Im Rahmen der Erfindung wurde gefunden, daß bei den speziell hergestellten Werktrockenmischungen die Quellung mit einer bestimmten reaktiven ettringitbildenden Quellkomponenten gezielt gesteuert werden kann, indem die Reaktivität der Quellkomponente bei vorgegebenem Mischungsverhältnis bzw. bei vorgegebener Zusatzmenge auf der Basis unterschiedlicher Kornverteilung und Feinheit variiert wird. Dabei werden erfindungsgemäß die Verfestigungsgeschwindigkeit der Matrix der Bindemittelmischung und die Ettringitbildungsgeschwindigkeit der Quellkomponente aufeinander abgestimmt. Verwendet wird zum Beispiel eine Quellkomponente auf Aluminat-Sulfat-Basis, insbesondere bestehend aus Calciumaluminat und Calciumsulfat, deren Kornverteilung und Mahlfeinheit im Rahmen der oben genannten Kornverteilung und Mahlfeinheit der Feinstzement-Bindemittelmischung liegt. Mit dem Parameter Mahlfeinheit und Kornverteilung ist die Quellung reproduzierbar steuerbar, so daß die Feinstzement-Bindemittelmischung den jeweiligen anwendungstechnischen Werkstoffanforderungen genügen kann.

Überraschend ist, daß eine ettringitbildende Quellkomponente einen synergistischen Effekt bewirkt, indem die Sedimentationsstabilität der Zementsuspension erhöht wird.

Besonders effektiv ist die erfindungsgemäße Quellsteuerung bei Verwendung calciumaluminat- und calciumferritarmer Klinkerfeinstmehle.

In der erfindungsgemäßen Werktrockenmischung ist die Quellkomponente auf die quellkomponentenfreie Feinstzement-Bindemittelmischung abgestimmt. Dabei wird die quellkomponentenfreie Feinstzement-Bindemittelmischung mit einem Anteil von 50 bis 95 Gew.-%, vorzugsweise von 70 bis 90 Gew.-%, und einer Kornverteilung mit d95 ≤ 24 µm, vorzugsweise von d95 ≤ 16 µm, und d50 ≤ 7 µm, vorzugsweise d50 ≤ µm, und vorzugsweise einem Verhältnis von d50 zu d95 = 0,33 ± 0,04 mit der Quellkomponente zum Beispiel auf Aluminat-Sulfat-Basis, vorzugsweise aus Calciumaluminat und Calciumsulfat, mit einem Anteil von 5 bis 50 Gew.-%, vorzugsweise von 10 bis 30 Gew.-%, vorzugsweise niedrigerer oder gleicher Feinheit und Kornverteilung vermischt, wobei die homogenisierte Gesamtmischung eine Kornverteilung mit d95 ≤ 24 µm, vorzugsweise d95 ≤ 16 µm, und d50 ≤ 7 µm, vorzugsweise d50 ≤ 5 µm, und einem Verhältnis von d50 zu d95 = 0,33 ± 0,04 aufweist.

Zur Ermittlung vorbestimmbarer unterschiedlicher Quelleffekte bei erfindungsgemäßen Feinstzement-Bindemittelmischungen wird zunächst die Bindemittelmischung in Chargen mit vorgegebenen unterschiedlichen Mahlfeinheiten und Korngrößenverteilungen hergestellt und anschließend werden die Verfestigungsgeschwindigkeiten der Chargen bestimmt. Zudem wird die Quellkomponente in Chargen mit vorgegebenen unterschiedlichen Mahlfeinheiten und Korngrößenverteilungen hergestellt und anschließend werden die Ettringitbildungsgeschwindigkeiten der Chargen bestimmt. Aus den ermittelten Verfestigungs- und Ettringitbildungsgeschwindigkeiten werden dann die Mischungen mit vorbestimmbarem Quellmaß festgelegt und danach die Produktion eingerichtet.

Die Erfindung wird anhand der Zeichnung im folgenden Beispiel näher erläutert. Es zeigen:
- Fig. 1: schematisch eine Anlage zur Herstellung der erfindungsgemäßen Werktrockenmischung;
- Fig. 2: in einem Diagramm die Wirkung der Zusatzmenge eines Fließmittels;
- Fig. 3: in einem Diagramm Kornverteilungen;
- Fi. 4: in einem Diagramm die Reaktionsgeschwindigkeit einer Feinstzement-Bindemittelmischung und einer Quellkomponente;
- Fig. 5: die Kornverteilung einer Feinstzement-Bindemittelmischung und einer Quellkomponente.

Die Erfindung erbringt erstmals eine baustellengerechte, baustellenfertige, Werktrockenmischung in Form eines einzigen trokkenen Gemisches, das nur noch mit der vorgeschriebenen Menge Wasser anzumachen ist. Mischungsfehler bei der Dosierung der Bestandteile zur Herstellung des Trockengemenges können nicht mehr auftreten. Das Anmischen mit Wasser erfolgt mit einem Hochleistungsmischgerät. Während des Mischens können die hochfeinen, trockenen Zusatzmittel ihre Wirkung unmittelbar entfalten. Die Werktrockenmischung ist mit gleicher Zusammensetzung und gleicher Qualität beliebig oft herstellbar. Dies gelingt aufgrund der Erkenntnis, daß Zusatzmittel nicht gemeinsam mit dem Zementklinker vermahlen werden dürfen, daß die Zusatzmittel vorzugsweise die gleiche oder eine höhere Feinheit und abgestimmte Kornverteilung aufweisen müssen und daß die Zusatzmittel in diesem Feinheitsbereich sehr intensiv wirken, indem relativ geringe Unterschiede in der Zusatzmenge (s. Fig. 2) und in der Kornverteilung und Feinheit große Unterschiede in der angestrebten Wirkung zeigen. Die Zusatzmengen der Zusatzmittel betragen vorzugsweise 2 bis 5 Gew.-% (ausgenommen die Quellkomponente).

Üblicherweise wird Feinstzement während der gemeinsamen Mahlung von Portlandzementklinker und zumindest einem Sulfatträger gewonnen, indem der entsprechende Feinstanteil aus einer Zementmühle immer nur dann abgezweigt wird, wenn ein Auftrag zur Lieferung von Feinstzement vorliegt. Dabei wird durch Windsichtung der Anteil abgezweigt, der den Erfordernissen bezüglich des d95-Wertes entspricht. Im Rahmen der Erfindung wurde erkannt, daß diese Gewinnungsart die grundsätzliche Ursache dafür ist, daß die Zementsuspensionen von Lieferung zu Lieferung keine gleichbleibende Qualität aufweisen. Man hat in Unkenntnis der Ursache versucht, dem Übel durch die Schaffung von Gebinden und durch die Vorschrift besonderer Mischungsreihenfolgen zu begegnen, was aber zu keinem ausreichenden Erfolg führte. Erst die gesonderte Feinstmahlung des Zementklinkers zu Klinkerfeinstmehl und des Hüttensandes zu Hüttensandfeinstmehl, sofern in der Feinstzement-Bindemittelmischung Hüttensandfeinstmehl enthalten sein kann, sowie die Verwendung der Zusatzstoffe und der Zusatzmittel, insbesondere in zumindest gleicher Feinheit und Kornverteilung, und die getrennte Bevorratung aller Komponenten für die Zusammenstellung von Trockengemengen ermöglicht die genaue Dosierung der Komponenten und nach einer Homogenisierung die Gewährleistung einer bestimmten Qualität des Füllgutes bzw. der Zementsuspension und des erhärteten Produkts. Erfindungswesentlich ist, daß die trockenen Zusatzmittel zumindest mit der Feinheit und Kornverteilung der Feinstzement-Bindemittelmischung verwendet werden oder aber die Feinstzement-Bindemittelmischung insgesamt die geforderte Feinheit und Kornverteilung aufweist, wobei die Zusatzmittel gröber sein können, sich aber in die Kornverteilung derart einreihen, daß die Kornverteilung der Bindemittelmischung die geforderten Werte aufweist. Sofern der Markt die Zusatzmittel in der gewünschten Feinheit und Kornverteilung nicht zur Verfügung stellt, werden die Zusatzmittel entsprechend gesondert hergestellt. Andernfalls müssen die Zusatzmittel, sofern sie in unterschiedlichen Feinheiten und Kornverteilungen auf dem Markt sind, entsprechend ausgewählt werden. Überraschend ist, daß die Zusatzmittel insbesondere in der feinst gemahlenen Form mit der feinst gemahlenen Bindemittelmischung ein besonderes, vordem unbekanntes Reaktionsverhalten haben und die angestrebten Injektionsqualitäten gewährleistet werden können, wenn dafür gesorgt wird, daß auch die Feinstzement-Bindemittelmischung mit definierter Qualität - d.h. bezüglich ihrer Bestandteile und ihrer Feinheit und Kornverteilung definiert - zur Verfügung steht. Dies war mit der üblichen Gewinnung durch Melken" bei der Ermahlung von Normalzementen nicht möglich, weil - wie im Rahmen der Erfindung festgestellt wurde - "Melk-Produkte" in ihrer Zusammensetzung schwanken, was wohl auf Entmischungen während des "Melk-Prozesses" zurückzuführen ist. Zum Beispiel reichern sich die "Melk-Produkte" mit bestimmten Mineralphasen, zum Beispiel mit Sulfaten, unkontrollierbar an.

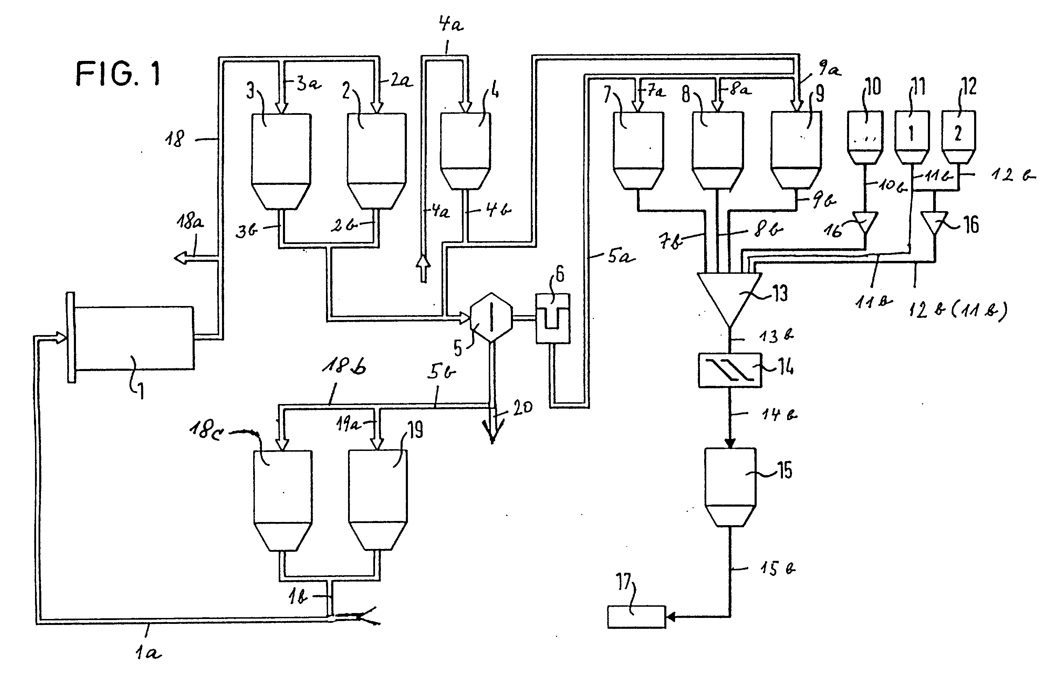

Mit der in der Fig. 1 schematisch dargestellten Anlage sind die erfindungsgemäßen Trockengemenge ohne weiteres herstellbar. Dabei wird einer Mühle 1 über den Förderweg la reiner Portlandzementklinker aufgegeben und in der Mühle 1 zu einem Klinkervormehl zerkleinert. Das Klinkervormehl wird über die Förderwege 18, 2a in ein Vorratssilo 2 gefördert. Mit derselben gereinigten Mühle 1, der über den Förderweg la ein Hüttensand in Granulatform aufgegeben wird, wird der Hüttensand zu einem Hüttensandvormehl vermahlen, das über die Förderwege 18, 3a in ein Vorratssilo 3 gefördert wird. Aus dem Förderweg 18 kann ein Teil des Mahlguts über den Förderweg 18a einer Zementanlage zur Herstellung von zum Beispiel normalem Portlandzement abgezweigt werden. In einem Vorratssilo 4 wird feingemahlener Bentonit bevorratet, der über den Förderweg 4a in das Silo 4 gelangt. Aus den Silos 2, 3 und 4 wird jeweils separat auf den Förderwegen 2b, 3b und 4b Gut abgezogen und in einem Windsichter 5 gesichtet, wobei der gleiche Windsichter 5 - jeweils gereinigt - nacheinander verwendet oder für jeden Gutstrom ein separater Windsichter (nicht dargestellt) bereitgestellt wird. Ebenso kann für den Hüttensand zum Beispiel eine andere Mühle zur Herstellung des Hüttensandvormehls verwendet werden. Die Anzahl der Mühlen richtet sich nach der gewünschten Effektivität der Anlage.

Beim Windsichten im Windsichter 5 wird das Feinstgut mit der vorbestimmten Mahlfeinheit und Kornverteilung abgezweigt und über den Förderweg 5a von einem Ventilator 6 in jeweils einen Förderweg 7a, 8a, 9a und von dort in jeweils ein Feinstgutsilo 7, 8 oder 9 geblasen. Beispielsweise enthält das Silo 7 Klinkerfeinstmehl, das Silo 8 Hüttensandfeinstmehl und das Silo 9 Bentonit in der vorgeschriebenen Mahlfeinheit und Kornverteilung.

Das Grobgut des Sichters 5 wird über einen Förderweg 5b und 18b bzw. 19a jeweils in ein Zwischenlagersilo 18c, zum Beispiel für Klinkermehl, und ein Zwischenlagersilo 19 für Hüttensandmehl, und von dort über einen Förderweg 1b, der in den Förderweg la mündet, wieder in die Mühle 1 transportiert.

Im Falle des Bentonits werden grobe Bestandteile über den Förderweg 20 verworfen, bzw. anderen Verwendungen zugeführt. Neben den Feinstgutsilos 7, 8 und 9 sind weitere Feinstgutsilos für Zusatzmittel, zum Beispiel die Feinstgutsilos 10, 11 und 12 vorhanden, die jeweils ein Zusatzmittel mit der vorbestimmten Feinheit und Kornverteilung enthalten.

Aus den Silos 7 bis 12 werden die Feinstgüter über die Förderwege 7b, 8b, 9b, 10b, 11b, 12b mittels Dosiereinrichtungen (nicht dargestellt) dosiert abgezogen und einer Waage 13 aufgegeben. Aus der Waage wird das Feinstgut über den Förderweg 13b in einen Mischer 14, zum Beispiel in einen Pflugscharmischer gebracht, in dem die Feinstgüter zur Werktrockenmischung homogenisiert werden. Anschließend kann die fertige Werktrockenmischung unmittelbar abgesackt oder über einen Förderweg 14b in ein Lagersilo 15 befördert werden, von wo die Fertigmischung über einen Förderweg 15b in einen Silowagen abgefüllt werden kann.

Das Zusetzen der Zusatzmittel kann zur Vereinfachung der Homogenisierung auch gruppiert erfolgen, indem zum Beispiel mindestens zwei Zusatzmittel, zum Beispiel aus den Silos 11 und 12, in eine gemeinsame Vorwaage 16 gefüllt und anschließend der Hauptwaage 13 aufgegeben werden. Zweckmäßig kann zudem sein, jedem Silo eine Vorwaage 16 zuzuordnen, was im Bereich des Silos 10 dargestellt ist.

Nach dem erfindungsgemäßen Verfahren wird der Zementklinker in der Mühle 1 ohne ein Zusatzmittel insbesondere ohne einen Sulfatträger vermahlen. Das Vormehl und das Feinstmehl enthalten somit insbesondere keine Sulfatkomponente. Zur Herstellung von Trockengemengen mit Quellkomponente erfolgt die Vermahlung des Portlandzementklinkers ohne Sulfatzusatz, wobei in einem Silo, zum Beispiel im Silo 10, eine Quellkomponente, oder im Silo 11 und im Silo 12 jeweils eine Komponente zur Zusammenstellung einer aus zwei Stoffen bestehenden Quellkomponente bevorratet und definiert zugegeben werden.

Ebenfalls getrennt vorgehalten bzw. bevorratet wird in einem Silo ein Sulfatträger für die Beeinflussung der Reaktion des Klinkerfeinstmehls, der üblicherweise schon bei der Vermahlung des Klinkers beigegeben wird.

Die erfindungsgemäße Anlage zur Herstellung der erfindungsgemäßen Werktrockenmischung weist selbstverständlich entsprechend viele Silos auf, wie die Werktrockenmischung Bestandteile bzw. Komponenten enthalten kann oder soll.

Mit der erfindungsgemäßen Anlage kann eine Werktrockenmischung mit bestimmten Bestandteilen in vorbestimmten Mengen mit vorbestimmter Kornfeinheit und Kornverteilung zusammengestellt werden, wodurch die Wirkung der Bestandteile in der Suspension gezielt gesteuert ist. Unregelmäßige Qualitäten des Füllguts können damit ausgeschlossen werden.

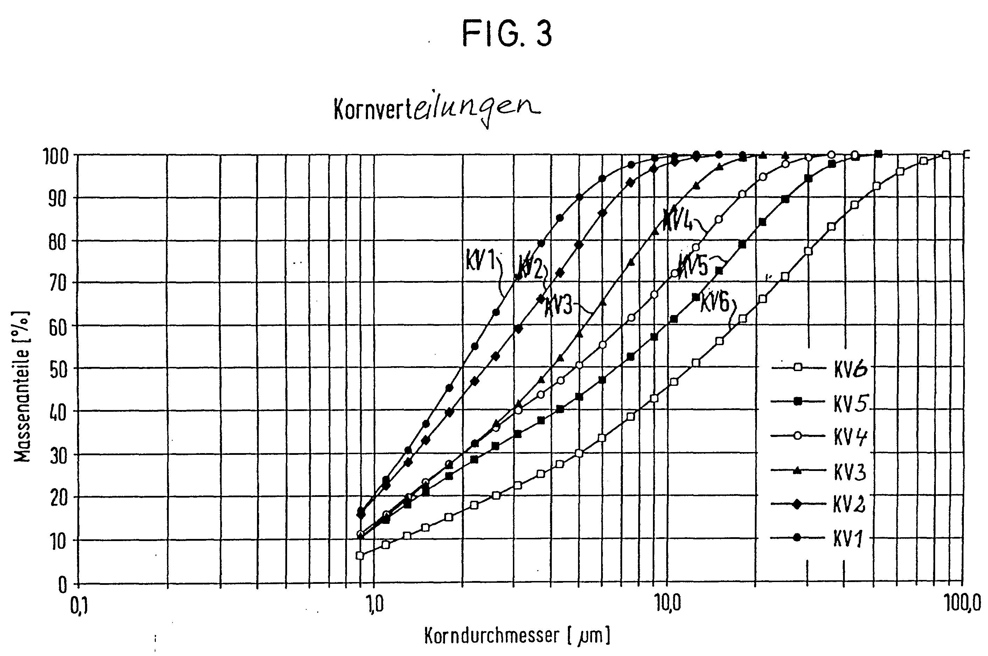

In Figur 3 sind Kornverteilungskurven dargestellt. Die Kurven KV1 bis KV3 zeigen beispielsweise Kornverteilungen von erfindungsgemäßen Trockengemengen. Die Kurven KV4 bis KV6 liegen außerhalb der geforderten Kornfeinheit und Kornverteilung für ein erfindungsgemäßes Trockengemenge. Es liegt aber im Rahmen der Erfindung, Zusatzmittel, insbesondere die Quellkomponente, mit Kornverteilungen gemäß den Kurven KV4 bis KV6 zu verwenden, sofern und soweit das Endprodukt, nämlich die fertige Werktrockenmischung, den Bereich der Feinheiten und Kornverteilungen nach den Kurven KV1 bis KV3 entspricht. Demgemäß kann zum Beispiel ein gröberes Zusatzmittel gemäß Kurve KV6 in einer Menge zugesetzt werden, die ein Trockengemenge mit der Kornverteilung der Kurve KV1 in den Bereich der Kornverteilung der Kurve KV3 verdrängt. Insbesondere bei der Herstellung von gezielt und definiert bzw. reproduzierbar quellenden Bindemittelmischungen wird von dieser Möglichkeit Gebrauch gemacht, weil das Quellmaß damit besonders effektiv definiert verändert werden kann.

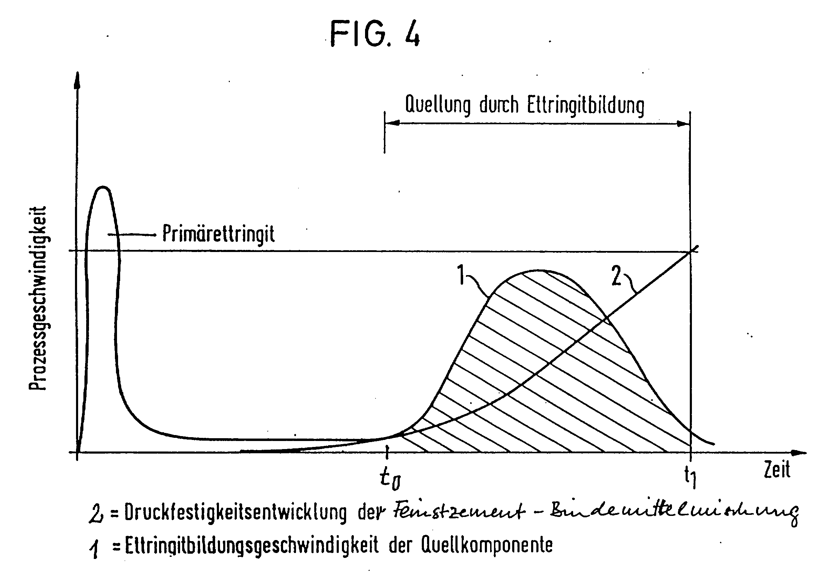

Figur 4 verdeutlicht beispielhaft die Abstimmung der Ettringitbildung bzw. die Ettringitbildungsgeschwindigkeit auf den Zeitraum und den Verlauf der Festigkeitsentwicklung eines erfindungsgemäßen definiert quellenden Trockengemenges. Die Ettringitbildung aufgrund des Quellkomponentenzusatzes (Kurve 1), die die Quellung der erhärtenden Suspension verursacht, ist derart auf die Festigkeitsentwicklung des Trockengemenges abgestimmt, daß sie mit der abgestimmt, daß sie mit der beginnenden Festigkeitsentwicklung (Kurve 2 bei t₀) zusammenfällt und fortdauert, während die Bindemittelmatrix noch schubweich, d.h. ähnlich jungem Beton noch elastisch-plastisch verformbar ist.

Erfindungsgemäß kann das Quellmaß sowohl durch die Zusatzmenge der Quellkomponente als auch durch die Feinheit und Kornverteilung der Quellkomponente gezielt gesteuert werden. Diese Zusammenhänge werden in den folgenden Beispielen näher erläutert.

### Beispiel 1

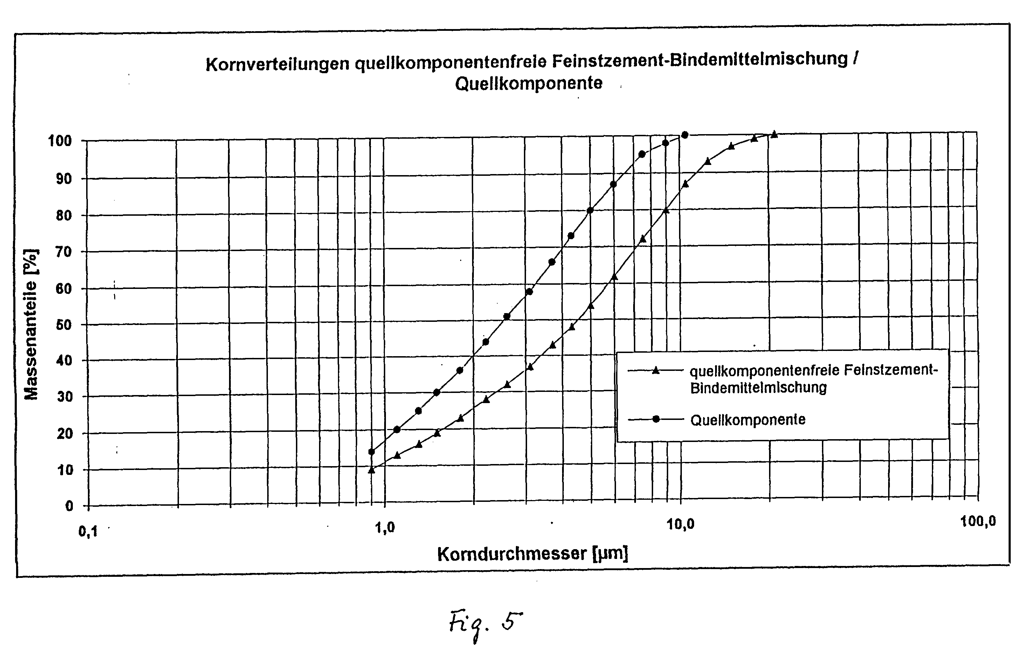

Fig. 5 zeigt eine Kornverteilung eines quellkomponentenfreien Trockengemenges sowie einer Quellkomponente. Die folgende Tabelle 2 enthält Kennwerte der Kornverteilungen des exemplarisch ausgewählten quellkomponentenfreien Trockengemenges und der Quellkomponente.

**Tabelle 2**

| Kennwerte der Kornverteilungen der exemplarisch quellkomponentenfreien Trockengemenges und der Quellkomponente | | |
|---|---|---|
| Kennwerte | quellkomponenten freies Trockengemenge | Quellkomponente |
| spez. Oberfläche | 8.000 cm²/g | 10.000 cm²/g |
| d50 | 4,5 µm | 2,5 µm |
| d95 | 14 µm | 7,5 µm |
| d50/d95 | 0,32 | 0,33 |

Der Einfluß des Mischungsverhältnisses von quellkomponentenfreien Trockengemenge und Quellkomponente auf das Quellvermögen des Trockengemenges ergibt sich aus Tabelle 3.

**Tabelle 3**

| Einfluß der Einwaage der Komponenten auf das Quellvermögen eines Trockengemenges | | | |
|---|---|---|---|
| Anteil Komponente A (Gew.-%) | 90 | 80 | 70 |
| Anteil Komponente B (Gew.-%) | 10 | 20 | 30 |
| Ausdehnung (mm/m) | 0 | 0,126 | 0,406 |
| Komponente A: quellkomponentenfreies Trockengemenge (spez. Oberfläche 8.000 cm²/g) Komponente B: Quellkomponente (spez. Oberfläche 10.000 cm²/g) | | | |

Aus der Tabelle 3 geht hervor, daß bei vorgegebener Feinheit der Komponente A und der Komponente B das Quellvermögen des Füllguts über das Mischungsverhältnis der Komponenten gesteuert werden kann.

### Beispiel 2

In diesem Beispiel wird der Einfluß der Feinheit der Quellkomponente auf das Quellvermögen eines Trockengemenges verdeutlicht. Zur Darstellung des Einflusses der Feinheit der Quellkomponente auf das Quellvermögen eines erfindungsgemäßen Trockengemenges wird die Feinheit der quellkomponentenfreien Feinstzement-Bindemittelmischung (Komponente A) vorgegeben und die Feinheit der Quellkomponente (Komponente B) variiert. Das Mischungsverhältnis der beiden Komponenten beträgt Komponente A/Komponente B = 70/30.

Die zugehörigen Kornverteilungen der beiden Komponenten sind in Fig. 3 enthalten. Die in der folgenden Tabelle 4 angegebenen Abkürzungen für die Kornverteilungen (KV) der beiden Komponenten beziehen sich auf die Darstellung in Fig. 3.

**Tabelle 4**

| Spezifikation der Komponenten eines exemplarisch ausgewählten erfindungsgemäßen Trockengemenges | | | | |
|---|---|---|---|---|
| Kennwert / Komponente | Komponente A (quellkomponentenfreies Trockengemenge) | Komponente B (Quellkomponente) | | |
| spez. Oberfläche (cm²/g) | 8.000 | 6.000 | 8.000 | 10.000 |
| Kornverteilung (gem. Fig. 3) | KV 3 | KV 4 | KV 3 | KV 2 |
| Anteil (Gew.-%) | 70 | 30 | 30 | 30 |

Die folgende Tabelle 5 gibt die Wirkung der Feinheit der Quellkomponente auf das Quellvermögen an.

**Tabelle 5**

| Einfluß der Feinheit der Quellkomponente auf das Quellvermögen eines erfindungsgemäßen Trockengemenges | | | |
|---|---|---|---|
| Komponente A | KV 3 (8.000 cm²/g) | KV 3 (8.000 cm²/g) | KV 3 (8.000 cm²/g) |
| Komponente B | KV 4 (6.000 cm²/g) | KV 3 (8.000 cm²/g) | KV 2 (10.000 cm²/g) |
| Mischungsverhältnis (A:B) | 70 : 30 | 70 : 30 | 70 : 30 |
| Ausdehnung (mm/m) | 3,98 | 2,13 | 0,406 |

Aus dem Beispiel ergibt sich, daß durch die Abstimmung der Feinheiten des quellkomponentenfreien Trockengemenges und der Quellkomponente das Quellvermögen der erfindungsgemäßen Trockengemenge gesteuert werden kann. Das Quellvermögen der Trockengemenge nimmt mit zunehmender Feinheit der Quellkomponente ab. Somit kann insbesondere das Quellvermögen von Trockengemengen über die Feinheit der Komponenten so gesteuert werden, daß quellfähige und auch quellfreie Feinstzement-Bindemittelmischungen, d.h. im letzteren Fall Bindemittelmischungen ohne Ausdehnung, hergestellt werden können. Der Einsatz quellfreier Mischungen wird zum Beispiel immer dann erforderlich sein, wenn beim Einsatz eines quellfähigen Füllguts Gefügeschädigungen im injizierten Bauteil durch den mit der Ausdehnung einhergehenden Quelldruck entstehen könnten.

Die Quellkomponente besteht - wie schon erwähnt - vorzugsweise aus Calciumaluminat und Calciumsulfat. Diese Bestandteile werden getrennt bis zur vorgegebenen unterschiedlichen Feinheiten und Kornverteilungen gemahlen und anschließend die Ettringitbildungsgeschwindigkeiten bestimmt. Das Gewichtsverhältnis von Calciumaluminat und Calciumsulfat wird unter Berücksichtigung der stöchiometrischen Verhältnisse zur vollständigen Ettringitbildung bestimmt. Ebenso werden Trockengemenge mit vorgegebenen unterschiedlichen Feinheiten und Korngrößenverteilungen zusammengestellt und anschließend die Festigkeitsentwicklungen ermittelt. Aus der Abstimmung der Festigkeitsentwicklungen und der Ettringitbildungsgeschwindigkeit wird dann die Mischung der Komponenten hergestellt, die ein bestimmtes Quellmaß gewährleistet. Diese Mischung wird dann als Werktrockenmischung in der erfindungsgemäßen Vorrichtung zusammengestellt und an die Baustelle geliefert.

Die Feststellung der Reaktionswirkung der Feinheit und Kornverteilung sowohl der Klinkerfeinstmehle, Hüttensandfeinstmehle oder der Gemenge daraus als auch der Zusatzmittel, insbesondere der Quellkomponenten, ermöglicht herstellungstechnisch ohne weiteres und ohne großen Aufwand und unmittelbar auf unterschiedliche anwendungsspezifische Anforderung zu reagieren, indem werkseitig entweder mehrere Silos für eine Komponente unterhalten werden, in denen die Komponente jeweils mit unterschiedlicher Feinheit und Kornverteilung lagert, oder indem die Mahlaggregate und Sichter von Charge zu Charge entsprechend eingestellt werden. Da die Silos mit Dosieranlagen kombiniert sind, können Zusammenstellungen von Werktrockenmischungen für Zementsuspensionen bzw. für aus den Zementsuspensionen erhärtete Produkte mit unterschiedlich definierten und reproduzierbaren Eigenschaften, insbesondere auch bezüglich der Quellung, nicht nur über die Dosiermengen, sondern insbesondere auch über definierte Feinheiten und Kornverteilungen kontrolliert erfolgen. Die Anwenderseite wird dadurch erheblich entlastet. Die Kontrolle der Mischungen wird ins Herstellerwerk verlagert, wo eine Kontrolle fachgerecht und einfacher ausführbar ist.

Als Quellkomponenten für die erfindungsgemäße Feinstzement-Bindemittelmischung sind insbesondere auch verwendbar Aluminiumsulfat, Tonerdeschmelzzement plus Gips, Calciumaluminate plus Gips, Aluminiumpulver plus Aluminatkomponente als Anreger plus Gips.

## Patentansprüche

1. Trockengemenge zur Herstellung einer Zementsuspension zum Füllen und/oder Verpressen von Porenräumen und Hohlräumen in Lockergesteinen, oder Hohlräumen und/oder Rissen im Fels oder in Betonbauteilen in Form einer fertigen, lediglich noch mit Wasser anzumischenden, auf die jeweilige Anwendung abgestimmten Werktrockenmischung, enthaltend ohne Sulfatträgerzusatz gemahlenen Klinkerfeinstmehl oder Hüttensandfeinstmehl oder Gemenge daraus, sowie Zusatzmittel und gegebenenfalls Zusatzstoffe und eine ettringitbildende Quellkomponente, die während der Festigkeitsentwicklung der Feinstzement-Bindemittelmischung nach dem Füllen und/oder Verpressen während des noch schubweichen Zustandes der Matrix der Feinstzement-Bindemittelmischung eine Quellung bewirkt, wobei die Gesamtheit des homogenen Trockengemenges durch eine stetige und abgestufte Kornverteilung mit Siebdurchgangswerten von d95 ≤ 24 µm und d50 ≤ 7 µm gekennzeichnet ist.

2. Trockengemenge nach Anspruch 1,
**gekennzeichnet durch**
Siebdurchgangswerte von d95 ≤ 16 und d50 ≤ 5 µm.

3. Trockengemenge nach Anspruch 1 und/ oder 2,
**gekennzeichnet durch**
ein Verhältnis der Siebdurchgangswerte von d50 zu d95 = 0,33 ± 0,04.

4. Trockengemenge nach einem oder mehreren der Ansprüche 1 bis 3,
**dadurch gekennzeichnet,**
daß sie 5 bis 95 Gew.-% Hüttensandfeinstmehl, bezogen auf das Klinkerfeinstmehl, enthält.

5. Trockengemenge nach einem oder mehreren der Ansprüche 1 bis 4,
**dadurch gekennzeichnet,**
daß es einen Anreger für das Hüttensandfeinstmehl mit gleicher oder feinerer Mahlfeinheit und Kornverteilung im Vergleich zum Hüttensandfeinstmehl enthält.

6. Trockengemenge nach einem oder mehreren der Ansprüche 1 bis 5,
**dadurch gekennzeichnet,**
daß es als pulverförmiges Fließmittel ein Naphtalinsulfonatformaldehydkondensat enthält.

7. Trockengemenge nach einem oder mehreren der Ansprüche 1 bis 6,
**dadurch gekennzeichnet,**
daß es Zusatzmittel, ausgenommen die Quellkomponente, jeweils in Mengen von 2 bis 5 Gew.-% enthält.

8. Trockengemenge nach einem oder mehreren der Ansprüche 1 bis 7,
**dadurch gekennzeichnet,**
daß es als Quellkomponente Calciumaluminat und Calciumsulfat enthält.

9. Trockengemenge nach einem oder mehreren der Ansprüche 1 oder 8,
**dadurch gekennzeichnet,**
daß das Klinkerfeinstmehl calciumaluminat- und calciumferritfrei ist.

10. Trockengemenge nach einem oder mehreren der Ansprüche 1 bis 9,
**dadurch gekennzeichnet,**
daß es die Quellkomponente in Mengen von 5 bis 50 Gew.-%, bezogen auf die quellkomponentenfreie Mischung, enthält.

11. Trockengemenge nach Anspruch 10,
**dadurch gekennzeichnet,**
daß es die Quellkomponente in Mengen von 10 bis 30 Gew.-% enthält.

12. Trockengemenge nach einem oder mehreren der Ansprüche 1 bis 11,
**dadurch gekennzeichnet,**
daß es als Zusatzstoffe Bentonit und/oder Trass und/oder hochdisperse Kieselsäure enthält.

13. Trockengemenge nach einem oder mehreren der Ansprüche 1 bis 12,
**dadurch gekennzeichnet,**
daß es als Zusatzmittel Fließmittel und/oder Erhärtungsverzögerer und/oder Erhärtungsbeschleuniger und/oder Wasserrückhaltemittel enthält.

14. Verfahren zur Herstellung eines Trockengemenge nach einem oder mehreren der Ansprüche 1 bis 13,
**dadurch gekennzeichnet,**
daß alle Komponenten, wie Klinkerfeinstmehl, Hüttensandfeinstmehl, Zusatzstoffe und Zusatzmittel in Form der gemäß einem oder mehreren der Ansprüche 1 bis 3 geforderten Feinheit und Kornverteilung getrennt in Vorratssilos vorgehalten, vorbestimmte Komponenten aus den entsprechenden Vorratssilos dosiert abgezogen und einem Mischer aufgegeben und im Mischer zur Werktrockenmischung homogenisierend gemischt werden.

15. Verfahren nach Anspruch 14,
**dadurch gekennzeichnet,**
daß Portlandzementklinker in einer Zementmühle ohne Sulfatträgerzusatz zu einem Klinkervormehl gemahlen und bevorratet wird, anschließend das Klinkervormehl zur Herstellung eines Klinkerfeinstmehls mit vorbestimmter Feinheit und Kornverteilung gesichtet und das Klinkerfeinstmehl bevorratet wird.

16. Verfahren nach Anspruch 15,
**dadurch gekennzeichnet,**
daß Hüttensandgranulat in einer Zementmühle zu einem Hüttensandvormehl gemahlen und bevorratet wird und daß anschließend zur Herstellung eines Hüttensandfeinstmehles mit vorbestimmter Feinheit und Kornverteilung das Hüttensandvormehl gesichtet und bevorratet wird.

17. Verfahren nach Anspruch 15 und/oder 16,
**dadurch gekennzeichnet,**
daß das jeweilige Grobgut des Sichters ebenfalls bevorratet wird.

18. Verfahren nach Anspruch 17,
**dadurch gekennzeichnet,**
daß Grobgut der jeweiligen Vormahlung zugeführt wird.

19. Verfahren nach Anspruch einem oder mehreren der Ansprüche 13 bis 18,
**dadurch gekennzeichnet,**
daß die Zusatzmittel vor der Bevorratung gemahlen werden.

20. Verfahren nach einem oder mehreren der Ansprüche 14 bis 19,
**dadurch gekennzeichnet,**
daß die Zusatzmittel in etwas gröberer Feinheit und etwas weiter abgestufter Kornverteilung zugemischt werden.

21. Verfahren nach einem oder mehreren der Ansprüche 14 bis 20,
**dadurch gekennzeichnet,**
daß zur Erzeugung einer reproduzierbaren Quellung des aus der Suspension erhärtenden Produkts eine ettringitbildende Quellkomponente dosiert in Mengen von 5 bis 50 Gew.-%, bezogen auf die quellkomponentenfreie Mischung zugemischt wird.

22. Verfahren nach Anspruch 21,
**dadurch gekennzeichnet,**
daß die Quellkomponente in Mengen von 10 bis 30 Gew.-% zugemischt wird.

23. Verfahren nach Anspruch 21 und/oder 22,
**dadurch gekennzeichnet,**
daß eine Quellkomponente verwendet wird, die eine Feinheit und eine Kornverteilung gemäß den Forderungen nach einem oder mehreren der Ansprüche 1 bis 3 aufweist.

24. Verfahren nach Anspruch 21 und/oder 22,
**dadurch gekennzeichnet,**
daß eine Quellkomponente in etwas gröberer Feinheit und etwas weiter abgestufter Kornverteilung im Vergleich zu den Angaben nach einem oder mehreren der Ansprüche 1 bis 3 zugemischt wird.

25. Verfahren nach einem oder mehreren der Ansprüche 21 bis 24,
**dadurch gekennzeichnet,**
daß Calciumaluminat und Calciumsulfat als Quellkomponente verwendet werden.

26. Verfahren nach einem oder mehreren der Ansprüche 14 bis 25,
**dadurch gekennzeichnet,**
daß die reproduzierbare Quellung des erhärtenden Produkts durch die getrennte Feststellung der Verfestigungsgeschwindigkeit der Bindemittelmatrix und der Ettringitbildungsgeschwindigkeit ermittelt wird und anschließend die Komponenten für eine optimale homogene Mi-. schung bezüglich eines definierten Quellmaßes zusammengestellt werden.

27. Verfahren nach einem oder mehreren der Ansprüche 14 bis 26,
**dadurch gekennzeichnet,**
daß die Quellkomponenten separat vermahlen und mit unter schiedlichen Feinheiten und Kornverteilungen vorgehalten werden.

28. Verfahren nach einem oder mehreren der Ansprüche 14 bis 27,
**dadurch gekennzeichnet,**
daß zumindest eine Komponente der Werktrockenmischung in unterschiedlichen Feinheiten und Kornverteilungen getrennt vorgehalten wird.

29. Verfahren nach einem oder mehreren der Ansprüche 11 bis 18,
**dadurch gekennzeichnet,**
daß jede Komponente der Werktrockenmischung in einem Vorratssilo (z.B. 7 bis 12) bevorratet wird, wobei jedes Silo mit einer Dosiereinrichtung kombiniert zusammenwirkt, wobei den Silos ein Mischer (14) nachgeschaltet ist.

30. Verfahren nach Anspruch 29,
**dadurch gekennzeichnet,**
daß ein Wägegefäß (13) verwendet wird, das dem Mischer (14) vorgeschaltet ist.

31. Verfahren nach Anspruch 29 und/oder 30,
**dadurch gekennzeichnet,**
daß als Mischer (14) ein Hochleistungsmischer verwendet wird.

32. Verfahren nach einem oder mehreren der Ansprüche 29 bis 31,
**dadurch gekennzeichnet,**
daß für mindestens eine Komponente mindestens zwei Vorratsbehälter verwendet werden, in denen die Komponenten bevorratet werden.

33. Verfahren nach einem oder mehreren der Ansprüche 29 bis 32,
**dadurch gekennzeichnet,**
daß ein Vorratssilo (15) verwendet wird, das dem Mischer (14) nachgeordnet ist.

34. Verfahren nach einem oder mehreren der Ansprüche 29 bis 33,
**dadurch gekennzeichnet,**
daß eine Anlage verwendet wird, die eine Zementmühle (1), ein Vorratssilo (2) und einen Windsichter (5) zur Erzeugung von Klinkerfeinstmehl aufweist, wobei die Auslaufseite der Zementmühle (1) mit der Einlaufseite des Vorratssilos (2) und die Auslaufseite des Vorratssilos (2) mit der Einlaufseite des Windsichters (5) sowie die Auslaufseite des Windsichters (5) mit der Einlaufseite eines Klinkerfeinstmehlsilos (8) über entsprechende Förderwege in Verbindung stehen.

35. Verfahren nach Anspruch 34,
**dadurch gekennzeichnet,**
daß eine Anlage verwendet wird, die eine Zementmühle (1), ein Vorratssilo (3) und einen Windsichter (5) zur Erzeugung von Hüttensandfeinstmehl aufweist, wobei die Auslaufseite der Zementmühle (1) mit der Einlaufseite des Vorratssilos (3) und die Auslaufseite des Vorratssilos (3) mit der Einlaufseite des Windsichters (5) sowie die Auslaufseite des Windsichters (5) mit der Einlaufseite des Hüttensandfeinstmehlsilos (7) über entsprechende Förderwege in Verbindung stehen.

36. Verfahren nach Anspruch 34 und/oder 35,
**dadurch gekennzeichnet,**
daß die Anlage gemäß Anspruch 24 oder 25 verwendet wird, bei der die Auslaufseite des Windsichters (5) über Förderwege mit der Einlaufseite eines Silos (18c, 19) in Verbindung steht, wobei die Auslaufseite des und/oder der Silos (18c/19) über einen Förderweg mit der Zementmühle (1) in Verbindung steht.

## Claims

1. Dry mix for producing a cement suspension for filling and/or injecting into pore spaces and hollow spaces in loose stones or hollow spaces and/or cracks in rock or in concrete components in the form of a finished factory dry mixture which is matched to the respective application and only needs to be mixed with water, containing superfine ground clinker milled without addition of sulphate carrier or superfine ground slag sand or mixtures thereof, plus modifiers and, if desired, additives and an ettringite-forming expanding component which expands during the strength development of the superfine cement binder mixture after the filling and/or injecting during the still free-to-shear state of the matrix of the superfine cement binder mixture, where the overall homogeneous dry mix is characterized by a continuous and gradated particle size distribution with sieve passage values of d₉₅ ≤ 24 µm and d₅₀ ≤ 7 µm.

2. Dry mix according to Claim 1, characterized by sieve passage values of d₉₅ ≤ 16 and d₅₀ ≤ 5 µm.

3. Dry mix according to Claim 1 and/or 2, characterized by a ratio of the sieve passage values of d₅₀ to d₉₅ = 0.33 ± 0.04.

4. Dry mix according to one or more of Claims 1 to 3, characterized in that it contains from 5 to 95% by weight of superfine ground slag sand, based on the superfine ground clinker.

5. Dry mix according to one or more of Claims 1 to 4, characterized in that it contains an activator for the superfine ground slag sand having a milling fineness and particle size distribution which is identical to or finer than that of the superfine ground slag sand.

6. Dry mix according to one or more of Claims 1 to 5, characterized in that it contains a naphthalene-sulphonate-formaldehyde condensate as pulverulent fluidizer.

7. Dry mix according to one or more of Claims 1 to 6, characterized in that it contains modifiers, with the exception of the expanding component, in amounts of from 2 to 5% by weight in each case.

8. Dry mix according to one or more of Claims 1 to 7, characterized in that it contains calcium aluminate and calcium sulphate as expanding component.

9. Dry mix according to one or more of Claims 1 or 8, characterized in that the superfine ground clinker is calcium-aluminate-free and calcium-ferrite-free.

10. Dry mix according to one or more of Claims 1 to 9, characterized in that it contains the expanding component in amounts of from 5 to 50% by weight, based on the expanding-component-free mixture.

11. Dry mix according to Claim 10, characterized in that it contains the expanding component in amounts of from 10 to 30% by weight.

12. Dry mix according to one or more of Claims 1 to 11, characterized in that it contains bentonite and/or trass and/or finely divided silica as additives.

13. Dry mix according to one or more of Claims 1 to 12, characterized in that it contains fluidizers and/or setting retarders and/or setting accelerators and/or water retention agents as modifiers.

14. Process for producing a dry mix according to one or more of Claims 1 to 13, characterized in that all components such as superfine ground clinker, superfine ground slag sand, additives and modifiers in the form of the fineness and particle size distribution required according to one or more of Claims 1 to 3 are held in stock separately in stock hoppers, predetermined components are taken from the corresponding stock hoppers in a metered manner and supplied to a mixer and are homogeneously mixed in the mixer to produce the factory dry mixture.

15. Process according to Claim 14, characterized in that Portland cement clinker is milled without addition of sulphate carrier in a cement mill to produce a precursor ground clinker which is stored, the precursor ground clinker is subsequently classified to produce a superfine ground clinker having a predetermined fineness and particle size distribution and the superfine ground clinker is stored.

16. Process according to Claim 15, characterized in that granulated slag sand is milled in a cement mill to produce a precursor ground slag sand which is stored and in that the precursor ground slag sand is subsequently classified to produce a superfine ground slag sand having a predetermined fineness and particle size distribution and is stored.

17. Process according to Claim 15 and/or 16, characterized in that the respective oversize from the classifier is likewise stored.

18. Process according to Claim 17, characterized in that the oversize is passed to the respective premilling.

19. Process according to one or more of Claims 13 to 18, characterized in that the modifiers are milled before storage.

20. Process according to one or more of Claims 14 to 19, characterized in that the modifiers are mixed in in somewhat coarser fineness and somewhat more gradated particle size distribution.

21. Process according to one or more of Claims 14 to 20, characterized in that, to produce a reproducible expansion of the product setting from the suspension, an ettringite-forming expanding component is added in a metered manner in amounts of from 5 to 50% by weight, based on the expanding-component-free mixture.

22. Process according to Claim 21, characterized in that the expanding component is added in amounts of from 10 to 30% by weight.

23. Process according to Claim 21 and/or 22, characterized in that an expanding component is used which has a fineness and a particle size distribution as required according to one or more of Claims 1 to 3.

24. Process according to Claim 21 and/or 22, characterized in that an expanding component is mixed in in somewhat coarser fineness and somewhat more gradated particle size distribution in comparison to the specifications of one or more of Claims 1 to 3.

25. Process according to one or more of Claims 21 to 24, characterized in that calcium aluminate and calcium sulphate are used as expanding component.

26. Process according to one or more of Claims 14 to 25, characterized in that the reproducible expansion of the setting product is determined by the separate establishment of the solidification rate of the binder matrix and the ettringite-formation rate and the components are then combined for an optimum homogeneous mixture with respect to a defined expansion index.

27. Process according to one or more of Claims 14 to 26, characterized in that the expanding components are milled separately and are held in stock in different finenesses and particle size distributions.

28. Process according to one or more of Claims 14 to 27, characterized in that at least one component of the factory dry mixture is held in stock separately in different finenesses and particle size distributions.

29. Process according to one or more of Claims 14 to 28, characterized in that each component of the factory dry mixture is stored in a stock hopper (e.g. 7 to 12), where each hopper works in combination with a metering device and a mixer (14) is arranged downstream of the hoppers.

30. Process according to Claim 29, characterized in that a weighing vessel (13) arranged upstream of the mixer (14) is used.

31. Process according to Claim 29 and/or 30, characterized in that a high-performance mixer is used as mixer (14).

32. Process according to one or more of Claims 29 to 31, characterized in that for at least one component use is made of at least two stock containers in which the components are stored.

33. Process according to one or more of Claims 29 to 32, characterized in that use is made of a stock hopper (15) which is arranged downstream of the mixer (14).

34. Process according to one or more of Claims 29 to 33, characterized in that use is made of a plant comprising a cement mill (1), a stock hopper (2) and an air classifier (5) for producing superfine ground clinker, where the outlet end of the cement mill (1) is connected to the inlet end of the stock hopper (2) and the outlet end of the stock hopper (2) is connected to the inlet end of the air classifier (5) and the outlet end of the air classifier (5) is connected to the inlet end of a superfine ground clinker hopper (8), in each case via appropriate transport paths.

35. Process according to Claim 34, characterized in that use is made of a plant which comprises a cement mill (1), a stock hopper (3) and an air classifier (5) for producing superfine ground slag sand, where the outlet end of the cement mill (1) is connected to the inlet end of the stock hopper (3) and the outlet end of the stock hopper (3) is connected to the inlet end of the air classifier (5) and the outlet end of the air classifier (5) is connected to the inlet end of the superfine ground slag sand hopper (7), in each case via appropriate transport paths.

36. Process according to Claim 34 and/or 35, characterized in that use is made of the plant according to Claim 34 or 35, in which the outlet end of the air classifier (5) is connected via transport paths to the inlet end of a hopper (18c, 19) and the outlet end of the hopper and/or hoppers (18c/19) is connected via a transport path to the cement mill (1).

## Revendications

1. Mélange pulvérulent pour la préparation d'une suspension de ciment pour le remplissage et/ou pour le remplissage par injection sous pression de porosités et d'espaces creux dans des roches poreuses, ou encore d'espaces creux et/ou de fissures dans le roc ou dans des éléments de construction en béton, sous la forme d'un mélange de fabrication pulvérulent prêt à l'emploi, qui ne doit plus qu'être mélangé avec de l'eau et qui est adapté à l'utilisation respective, contenant de la poudre ultrafine de clinker ou de la poudre ultrafine de sable métallurgique ou encore un mélange de ces dernières, sans addition de sulfate à titre de support, ainsi que des additifs et, le cas échéant, des substances d'addition et un composant de gonflement formateur d'ettringite qui déclenche un gonflement au cours de la consolidation du mélange de ciment ultrafin-liant après le remplissage et/ou après le remplissage par injection sous pression, alors que la matrice du mélange de ciment ultrafin-liant se trouve à l'état dans lequel elle ne résiste pas encore à des forces de cisaillement, dans lequel la totalité du mélange pulvérulent homogène est caractérisée par une distribution granulométrique constante et échelonnée possédant des valeurs granulométriques d95 ≤ 24µm et d50 ≤ 7 µm.

2. Mélange pulvérulent selon la revendication 1, caractérisé par des valeurs granulométriques d95 ≤ 16 µm et d50 ≤ 5 µm.

3. Mélange pulvérulent selon les revendications 1 et/ou 2, caractérisé par un rapport des valeurs granulométriques d50 à d95 = 0,33 ± 0,04.

4. Mélange pulvérulent selon une ou plusieurs des revendications 1 à 3, caractérisé en ce qu'il contient de la poudre ultrafine de sable métallurgique à concurrence de 5 à 95 % en poids, rapportés à la poudre ultrafine de clinker.

5. Mélange pulvérulent selon une ou plusieurs des revendications 1 à 4, caractérisé en ce qu'il contient un activateur pour la poudre ultrafine de sable métallurgique possédant un degré de mouture et une distribution granulométrique égaux ou plus fins par rapport à celui et à celle de la poudre ultrafine de sable métallurgique.

6. Mélange pulvérulent selon une ou plusieurs des revendications 1 à 5, caractérisé en ce qu'il contient, à titre d'agent de fluidification pulvérulent, un condensat de naphtasulfonate-formaldéhyde.

7. Mélange pulvérulent selon une ou plusieurs des revendications 1 à 6, caractérisé en ce qu'il contient des additifs, en-dehors du composant de gonflement, respectivement dans des quantités de 2 à 5 % en poids.

8. Mélange pulvérulent selon une ou plusieurs des revendications 1 à 7, caractérisé en ce qu'il contient à titre de composant de gonflement de l'aluminate de calcium et du sulfate de calcium.

9. Mélange pulvérulent selon une ou plusieurs des revendications 1 à 8, caractérisé en ce que la poudre ultrafine de clinker est exempte d'aluminate de calcium et de ferrite de calcium.

10. Mélange pulvérulent selon une ou plusieurs des revendications 1 à 9, caractérisé en ce qu'il contient le composant de gonflement dans des quantités de 5 à 50 % en poids rapportés au mélange exempt de composant de gonflement.

11. Mélange pulvérulent selon la revendication 10, caractérisé en ce qu'il contient le composant de gonflement dans des quantités de 10 à 30 % en poids.

12. Mélange pulvérulent selon une ou plusieurs des revendications 1 à 11, caractérisé en ce qu'il contient, à titre de substances d'addition, de la bentonite et/ou du trass et/ou de l'acide silicique fortement dispersé.

13. Mélange pulvérulent selon une ou plusieurs des revendications 1 à 12, caractérisé en ce qu'il contient, à titre d'additifs, des agents de fluidification et/ou des ralentisseurs du durcissement et/ou des accélérateurs du durcissement et/ou des agents de rétention de l'humidité.

14. Procédé pour la préparation d'un mélange pulvérulent selon une ou plusieurs des revendications 1 à 13, caractérisé en ce qu'on extrait de manière dosée des silos de mise en réserve correspondants tous les composants tels que de la poudre ultrafine de clinker, de la poudre ultrafine de sable métallurgique, des substances d'addition et des additifs sous la forme des composants prédéfinis et déposés au préalable de manière séparée dans des silos de mise réserve avec la mouture et la distribution granulométrique requises selon les revendications 1 à 3, on les introduits dans un malaxeur et on les soumet dans le malaxeur à un malaxage pour obtenir un mélange homogène sous la forme du mélange de fabrication pulvérulent.

15. Procédé selon la revendication 14, caractérisé en ce qu'on broie et on met en réserve du clinker de ciment Portland dans un broyeur à boulets et à cylpeps exempt de sulfate à titre d'additif pour obtenir une poudre mère de clinker; ensuite on fait passer la poudre mère de clinker à travers un tamis pour obtenir une poudre ultrafine de clinker possédant une mouture et une distribution granulométrique prédéfinies et on met en réserve la poudre ultrafine de clinker.

16. Procédé selon la revendication 15, caractérisé en ce qu'on broie et on met en réserve le produit de granulation de sable métallurgique dans un broyeur à boulets et à cylpeps pour obtenir une poudre mère de sable métallurgique et en ce qu'on fait passer à travers un tamis et on met en réserve par la suite la poudre mère de sable métallurgique pour la préparation d'une poudre ultrafine de sable métallurgique possédant la mouture et la distribution granulométrique prédéfinies.

17. Procédé selon les revendications 15 et/ou 16, caractérisé en ce qu'on met également en réserve la matière grossière respective du dispositif de tamisage.

18. Procédé selon la revendication 17, caractérisé en ce qu'on achemine de la matière grossière au broyage préalable respectif.

19. Procédé selon une ou plusieurs des revendications 13 à 18, caractérisé en ce qu'on broie les additifs avant la mise en réserve.

20. Procédé selon une ou plusieurs des revendications 14 à 19, caractérisé en ce qu'on ajoute par mélange les additifs possédant une mouture légèrement plus grossière et une distribution granulométrique dont l'échelonnement est légèrement plus large.

21. Procédé selon une ou plusieurs des revendications 14 à 20, caractérisé en ce que, pour obtenir un gonflement reproductible du produit durcissant à partir de la suspension, on ajoute par mélange un composant de gonflement formateur d'ettringite de manière dosée dans des quantités de 5 à 50 % en poids rapportés au mélange exempt du composant de gonflement.

22. Procédé selon la revendication 21, caractérisé en ce qu'on ajoute le composant de gonflement par mélange dans des quantités de 10 à 30 % en poids.

23. Procédé selon la revendication 21 et/ou 22, caractérisé en ce qu'on utilise un composant de gonflement qui présente une mouture et une distribution granulométrique correspondant aux exigences selon une ou plusieurs des revendications 1 à 3.

24. Procédé selon la revendication 21 et/ou 22, caractérisé en ce qu'on ajoute par mélange un composant de gonflement possédant une mouture légèrement plus grossière et une distribution granulométrique à échelonnement légèrement plus large par rapport aux indications selon l'une ou plusieurs des revendications 1 à 3.

25. Procédé selon une ou plusieurs des revendications 21 à 24, caractérisé en ce qu'on utilise à titre de composant de gonflement de l'aluminate de calcium et du sulfate de calcium.

26. Procédé selon une ou plusieurs des revendications 14 à 25, caractérisé en ce qu'on calcule le gonflement reproductible du produit durcissant par la détermination séparée de la vitesse de consolidation de la matrice de liant et de la vitesse de formation d'ettringite et on combine ensuite les composants pour obtenir un mélange homogène optimal en ce qui concerne une mesure du gonflement définie.

27. Procédé selon une ou plusieurs des revendications 14 à 26, caractérisé en ce qu'on broie les composants de gonflement de manière séparée et on les met en réserve avec des moutures et avec des distributions granulométriques différentes.

28. Procédé selon une ou plusieurs des revendications 14 à 27, caractérisé en ce qu'on fournit de manière séparée au moins un composant du mélange de production pulvérulent avec des moutures et des distributions granulométrique différentes.

29. Procédé selon une ou plusieurs des revendications 11 à 18, caractérisé en ce qu'on met en réserve chaque composant du mélange de fabrication pulvérulent dans un silo de réserve (par exemple 7 à 12), chaque silo coopérant de manière combinée avec un mécanisme de dosage, un malaxeur (14) étant monté à la suite des silos.

30. Procédé selon la revendication 29, caractérisé en ce qu'on utilise un récipient de pesée (13) qui est monté en amont du malaxeur (14).

31. Procédé selon la revendication 29 et/ou 30, caractérisé en ce qu'on utilise à titre de malaxeur (14) un malaxeur à grand rendement.

32. Procédé selon une ou plusieurs des revendications 29 à 31, caractérisé en ce qu'on utilise, pour au moins un composant, au moins deux récipients de mise en réserve dans lesquels on met les composants en réserve.

33. Procédé selon une ou plusieurs des revendications 29 à 32, caractérisé en ce qu'on utilise un silo de mise en réserve (15) qui est monté à la suite du malaxeur (14).

34. Procédé selon une ou plusieurs des revendications 29 à 33, caractérisé en ce qu'on utilise une installation qui présente un broyeur à boulets et à cylpeps (1), un silo de mise en réserve (2) et un séparateur à air (5) pour la formation de poudre ultrafine de clinker, le côté sortie du broyeur à boulets et à cylpeps (1) étant relié au côté entrée du silo de mise en réserve (2) et le côté sortie du silo de mise en réserve (2) étant relié au côté entrée du séparateur à air (5), le côté sortie du séparateur à air (5) étant également relié au côté entrée d'un silo (8) pour de la poudre fine de clinker via des voies de transport correspondantes.

35. Procédé selon la revendication 34, caractérisé en ce qu'on utilise une installation qui présente un broyeur à boulets et à cylpeps (1), un silo de mise en réserve (3) et un séparateur à air (5) pour la formation de poudre ultrafine de sable métallurgique, le côté sortie du broyeur à boulets et à cylpeps (1) étant relié au côté entrée du silo de mise en réserve (3) et le côté sortie du silo de mise en réserve (3) étant relié au côté entrée du séparateur à air (5), le côté sortie du séparateur à air (5) étant également relié au côté entrée du silo (7) pour de la poudre ultrafine de sable métallurgique via des voies de transport correspondantes.

36. Procédé selon la revendication 34 et/ou 35, caractérisé en ce qu'on utilise l'installation selon la revendication 34 ou selon la revendication 35 dans laquelle le côté sortie du séparateur à air (5) est relié via des voies de transport au côté entrée d'un silo (18c, 19), le côté sortie du ou des silos (18c, 19) étant relié via une voie de transport au broyeur à boulets et à cylpeps (1).
